# EUROPÄISCHE PATENTSCHRIFT

(11) **EP 3 116 169 B1**
(45) Veröffentlichungstag und Bekanntmachung des Hinweises auf die Patenterteilung: **30.10.2019**
(21) Anmeldenummer: 16178673.6
(22) Anmeldetag: 08.07.2016
(51) Int. Cl.: H04L 12/403, H04B 3/54

(54) **DATENÜBERTRAGUNGSSYSTEM ZUR STROMMODULIERTEN DATENÜBERTRAGUNG**
DATA TRANSMISSION SYSTEM FOR POWER-MODULATED DATA TRANSMISSION
SYSTEME DE TRANSMISSION DE DONNEES A MODULATION DE COURANT

(30) Priorität: 09.07.2015 DE 102015111112
(43) Veröffentlichungstag der Anmeldung: 11.01.2017
(73) Patentinhaber: PHOENIX CONTACT GmbH & Co. KG, 32825 Blomberg (DE)
(72) Erfinder: Säck, Klaus-Peter, 32760 Detmold (DE); Oster, Viktor, 32825 Blomberg (DE)
(74) Vertreter: Blumbach · Zinngrebe Patentanwälte PartG mbB

(56) Entgegenhaltungen:
- WO-A1-2007/013003
- DE-A1- 19 900 869
- US-A- 5 793 754

## Beschreibung

Die Erfindung betrifft ein Datenübertragungssystem zur strommodulierten Übertragung von Daten zwischen einer Mastereinrichtung und wenigstens einer Slaveeinrichtung, wobei das Datenübertragungssystem in einer sicherheitsgerichteten Automatisierungsanlage einsetzbar ist. Ferner betrifft die Erfindung eine Mastereinrichtung und eine Slaveeinrichtung zur Verwendung in einem solchen Datenübertragungssystem.

Bekannt ist, in der Automatisierungstechnik Datenübertragungssysteme einzusetzen, welche beispielsweise eine zentrale Steuerung und mehrere E/A-Geräte aufweisen, die über ein Übertragungsmedium miteinander verbunden sind, um Daten untereinander austauschen zu können.

Ein Datenübertragungssystem, das in einem Kraftfahrzeug implementiert ist, ist aus der EP 0 836 967 B1 bekannt. Das Datenübertragungssystem weist eine Zentraleinheit und mehrere Steuermodule auf, die mittels eines Bussystems verbunden sind, um digitale Daten austauschen zu können. Das Bussystem ist als einadriges System ausgebildet, welches sowohl der Versorgung der Steuermodule mit elektrischer Betriebsenergie als auch der Übertragung der digitalen Daten dient. Die Übertragung der digitalen Daten von der Zentraleinheit zu den Steuermodulen erfolgt durch Spannungsmodulation einer Gleichspannung, während die Aussendung von Datensignalen von den Steuermodulen zur Zentraleinheit durch Modulation eines Gesamtverbraucherstroms erfolgt.

Ein Datenübertragungssystem gemäß dem Master-Slave-Prinzip, welches in einem Kraftfahrzeug-Insassenschutzsystem implementiert ist, ist ferner aus der EP 1 180 278 B1 bekannt. Hierbei ist eine übergeordnete Steuereinheit über einen gemeinsamen Datenbus mit Funktionseinheiten verbunden. Die übergeordnete Steuereinheit überträgt Datenworte in Form eines unipolaren Spannungssignals, dessen Pegelzustände zwischen höherem und tieferem Spannungswert wechseln, über den Datenbus zu den Funktionseinheiten. An dem Datenbus liegt somit stets eine Spannung an, so dass die Funktionseinheiten eine Rückmeldung in Form von Stromimpulsen durch eine entsprechende Impedanzbelastung an die übergeordnete Steuereinheit schicken können.

Aus der DE 199 00 869 A1 ist eine Steuer- und Datenübertragungsanlage bekannt, welche im Arbeitsstromprinzip arbeitet und somit für sicherheitsgerichtete Anwendungen nicht zulässig ist. Die bekannte Steuer- und Datenübertragungsanlage weist einen Bus auf, über den nicht nur Daten, sondern auch die Energieversorgung erfolgt. Jeder Teilnehmer der Steuer- und Datenübertragungsanlage wird zwischen einem Sendebetrieb und einem Empfangsbetrieb hin und her geschaltet, um Daten senden oder empfangen zu können.

Aus der US 5,793,754 A ist ein Kommunikationssystem bekannt, bei dem analoge oder digitale Signale mittels Pulsdichtemodulation über eine Zweidraht-Leitung von einem Master zu einem Slave und umgekehrt übertragen werden können.

Aus der WO 2007/013003 A1 ist ein Beleuchtungssystem bekannt, welches eine intelligente elektrische Stromquelle aufweist, die in Reihe mit mehreren Beleuchtungseinheiten verbunden ist. Die intelligente elektrische Stromquelle ist dazu ausgebildet, einen elektrischen Strom mit modulierten Befehlsdaten bereitzustellen. Die Beleuchtungseinheiten sind in der Lage, die empfangenen modulierten Befehlsdaten zu empfangen und auszuwerten, um Lichtquellen gezielt ein- oder ausschalten zu können.

Der Erfindung liegt die Aufgabe zugrunde, ein in einer sicherheitsgerichteten Automatisieungsanlage einsetzbares Datenübertragungssystem zur strommodulierten Übertragung von Daten zwischen einer Mastereinrichtung und wenigstens einer Slaveeinrichtung zu schaffen, welches eine hohe EMV-Stabilität, Signalleitungslängen von mehr als 1000 Meter und eine einfache und kostengünstige Implementierung ermöglicht.

Ein Kerngedanke der Erfindung kann darin gesehen werden, ein Datenübertragungssystem zur strommodulierten Übertragung von Daten zwischen einer Mastereinrichtung und wenigstens einer Slaveeinrichtung zu schaffen, bei dem Daten sowohl von der Mastereinrichtung zu den Slaveeinrichtungen als auch Daten von den Slaveeinrichtungen zur Mastereinrichtung mittels Modulation eines Ruhestroms übertragen werden. Hierzu arbeitet das Datenübertragungssystem gemäß dem Ruhestromprinzip. Das Ruhestromprinzip besagt, dass in einem Ruhezustand, d.h. in einem fehlerfreien Betrieb des Datenübertragungssystems ständig ein vorbestimmter konstanter Ruhestrom durch den Stromkreis fließt. Ein geeignetes Einsatzgebiet für ein solches Datenübertragungssystem können sicherheitsgerichtete Automatisierungsanlagen sein. Die Mastereinrichtung und die Slaveeinrichtungen weisen jeweils eine Strommesseinrichtung und eine Strommodulationseinrichtung auf, über die sie an eine Stromschleife angeschlossen sind. Die Mastereinrichtung weist ferner eine elektrische Energiequelle auf, die den Ruhestrom bereitstellen kann.

Das oben genannte technische Problem wird durch die Merkmale des Anspruchs 1 gelöst.

Danach ist ein in einer sicherheitsgerichteten Automatisierungsanlage einsetzbares Datenübertragungssystem zur strommodulierten Übertragung von Daten zwischen einer Mastereinrichtung und wenigstens einer Slaveeinrichtung vorgesehen. Das Datenübertragungssystem weist eine Stromschleife auf, die nur zur Datenübertragung ausgebildet ist. Vorzugsweise ist die Stromschleife als ein System zur leitungsgebundenen Datenübertragung ausgebildet. Weiterhin weist das Datenübertragungssystem eine Mastereinrichtung mit einer ersten Auswerte- und Steuereinheit, die zum Erfassen eines externen Schaltzustands ausgebildet ist, auf. Der externe Schaltzustand signalisiert einen Ruhe- oder Arbeitszustand des Datenübertragungssystems. Die Mastereinrichtung weist weiterhin eine erste an die Stromschleife angeschlossene, von der ersten Auswerte- und Steuereinheit ein- und ausschaltbare elektrische Energiequelle auf, welche bei einem von der ersten Auswerte- und Steuereinheit erfassten Ruhezustand einen vorbestimmten konstanten Ruhestrom durch die Stromschleife treibt. Der Ruhestrom ist vorzugsweise ein Gleichstrom. Bei der elektrischen Energiequelle kann es sich um eine spannungsgesteuerte Stromquelle handeln. Die Mastereinrichtung weist ferner eine in die Stromschleife geschaltete erste Strommodulationseinrichtung auf, welche dazu ausgebildet ist, den Ruhestrom in Abhängigkeit von einem Steuersignal, welches von der ersten Auswerte- und Steuereinheit bereitgestellt wird, zu modulieren, um Daten über die Stromschleife zu wenigstens einer Slaveeinrichtung übertragen. Weiterhin weist die Mastereinrichtung eine in die Stromschleife geschaltete erste Strommesseinrichtung, welche mit der ersten Auswerte- und Steuereinheit verbunden ist, auf. Die erste Strommesseinrichtung und die erste Strommodulationseinrichtung, sind in Reihe geschaltet. Die erste Auswerte- und Steuereinheit ist dazu ausgebildet, den von der ersten Strommesseinrichtung gemessenen Strom auszuwerten und in Abhängigkeit von dem Auswerteergebnis eine definierte Aktion auszuführen oder auszulösen. Eine definierte Aktion kann beispielsweise die teilweise oder vollständige Abschaltung des Datenübertragungssystems sein.

Eine erste Slaveeinrichtung ist vorgesehen, die eine zweite Auswerte- und Steuereinheit sowie eine in die Stromschleife geschaltete zweite Strommodulationseinrichtung enthält, welche dazu ausgebildet ist, den Ruhestrom in Abhängigkeit von einem Steuersignal, welches von der zweiten Auswerte- und Steuereinheit bereitgestellt wird, zu modulieren, um Daten über die Stromschleife zum Beispiel zur Mastereinrichtung zu übertragen. Weiterhin enthält die erste Slaveeinrichtung eine in die Stromschleife geschaltete zweite Strommesseinrichtung, welche mit der zweiten Auswerte- und Steuereinheit verbunden ist. Die zweite Strommesseinrichtung und die zweite Strommodulationseinrichtung sind in Reihe geschaltet. Die zweite Auswerte- und Steuereinheit ist dazu ausgebildet, den von der zweiten Strommesseinrichtung gemessenen Strom auszuwerten und in Abhängigkeit von dem Auswerteergebnis eine definierte Aktion auszuführen oder auszulösen.

Dank des erfindungsgemäßen Datenübertragungssystems ist es möglich, Signale mittels Strommodulation in beide Richtungen, d. h. sowohl von der ersten Slaveeinrichtung zur Mastereinrichtung als auch von der Mastereinrichtung zur ersten Slaveeinrichtung zu übertragen, so dass alle an die Stromschleife angeschlossenen Master- und Slaveeinrichtungen Signale gleichzeitig empfangen und auswerten können. Auf diese Weise wird ein Datenübertragungssystem geschaffen, welches sehr kurze Reaktionszeiten aufweist, die unabhängig von der Durchlaufzeit der Signale durch die an die Stromschleife angeschlossenen Master- und Slaveeinrichtungen sind.

Das Datenübertragungssystem kann einfach und kostengünstig erweitert werden, indem wenigstens eine weitere Slaveeinrichtung in die Stromschleife geschaltet wird. Die wenigstens eine weitere Slaveeinrichtung enthält wiederum eine dritte Auswerte- und Steuereinheit, eine in die Stromschleife geschaltete dritte Strommodulationseinrichtung, welche dazu ausgebildet ist den Ruhestrom in der Stromschleife in Abhängigkeit von einem Steuersignal, welches von der dritten Auswerte- und Steuereinheit bereitgestellt wird, zu modulieren und Daten zur Mastereinrichtung und/oder zur Slaveeinrichtung zu übertragen. Angemerkt sei, dass auf diese Weise Daten mittels Strommodulation von der Slaveeinrichtung gleichzeitig in beide Richtungen übertragen werden können, so dass sowohl die vorgeschaltete Mastereinrichtung als auch die wenigstens eine weitere, nachgeschaltete Slaveeinrichtung die von der ersten Slaveeinrichtung übertragenen Daten gleichzeitig empfangen können. Die wenigstens eine weitere Slaveeinrichtung enthält weiterhin eine in die Stromschleife geschaltete dritte Strommesseinrichtung, welche mit der dritten Auswerte- und Steuereinheit verbunden ist. Die dritte Auswerte- und Steuereinheit ist dazu ausgebildet, den an der dritten Strommesseinrichtung gemessene Strom auszuwerten und in Abhängigkeit von dem Auswerteergebnis eine bestimmte Aktion auszuführen oder auszulösen.

Eine einfache und kostengünstige Realisierung des Datenübertragungssystems wird erreicht, wenn die erste Strommodulationseinrichtung der Mastereinrichtung eine erste Schalteinrichtung aufweist, welche unter Ansprechen auf ein Steuersignal der Auswerte- und Steuereinheit der Mastereinrichtung die Stromschleife insbesondere zur Informationsübertragung öffnen und schließen kann, und/oder wenn die zweite Strommodulationseinrichtung der ersten Slaveeinrichtung eine zweite Schalteinrichtung aufweist, welche unter Ansprechen auf ein Steuersignal der Auswerte- und Steuereinheit der ersten Slaveeinrichtung die Stromschleife insbesondere zur Informationsübertragung öffnen und schließen kann, und/oder wenn die dritte Strommodulationseinrichtung der zweiten Slaveeinrichtung eine dritte Schalteinrichtung aufweist, welche unter Ansprechen auf ein Steuersignal der Auswerte- und Steuereinheit der zweiten Slaveeinrichtung die Stromschleife insbesondere zur Informationsübertragung öffnen und schließen kann. Auf diese Weise kann die Stromschleife durch Mastereinrichtung, und/oder durch die erste Slaveeinrichtung und/oder durch die zweite Slaveeinrichtung gezielt unterbrochen werden.

Optional oder zusätzlich kann die erste Strommesseinrichtung, die zweite Strommesseinrichtung und die dritte Strommesseinrichtung jeweils einen Messwiderstand aufweisen. Der Messwiderstand kann beispielsweise mit einem Differenzverstärker verbunden sein, welcher mit der jeweiligen Auswerte- und Steuereinheit verbunden ist.

Auf diese Weise enthalten die Master- und Slaveeinrichtungen jeweils eine Stromschnittstelle, die im Wesentlichen nur in Reihe geschaltete elektrische Widerstände oder Impedanzen aufweisen.

Der externe Schaltzustand kann der Mastereinrichtung über eine vierte Schalteinrichtung signalisiert werden. In diesem Fall weist die Mastereinrichtung wenigstens einen ersten, mit der ersten Auswerte- und Steuereinheit verbundenen Eingang auf, an den die vierte Schalteinrichtung angeschlossen ist. Die vierte Schalteinrichtung kann beispielsweise als Not-Aus-Schaltgerät ausgebildet sein.

Gemäß einer vorteilhaften Weiterbildung kann die Mastereinrichtung wenigstens einen von der ersten Auswerte- und Steuereinheit ansteuerbaren ersten Ausgang aufweisen.

Alternativ oder zusätzlich kann die erste Slaveeinrichtung wenigstens einen von der zweiten Auswerte- und Steuereinheit ansteuerbaren zweiten Ausgang aufweisen und/oder die wenigstens eine weitere Slaveeinrichtung wenigstens einen von der dritten Auswerte- und Steuereinheit ansteuerbaren dritten Ausgang aufweisen. Auf diese Weise können sowohl die Mastereinrichtung als auch die Slaveeinrichtungen als Ausgangseinrichtungen betrieben werden, an welche jeweils ein Aktor angeschlossen werden kann.

Um eine schnelle Abschaltung des gesamten Datenübertragungssystems oder eines Teils des Datenübertragungssystems zu ermöglichen, kann die erste Auswerte- und Steuereinheit der Mastereinrichtung die erste elektrische Energiequelle und/oder die erste Schalteinrichtung derart ein- und ausschalten, dass ein Abschaltsignal in der Stromschleife erscheint.

Alternativ oder zusätzlich kann die zweite Auswerte- und Steuereinheit der ersten Slaveeinrichtung dazu ausgebildet sein, die zweite Schalteinrichtung derart anzusteuern, dass ein Abschaltsignal in der Stromschleife erscheint.

Alternativ oder zusätzlich kann auch die dritte Auswerte- und Steuereinheit der wenigstens einen weiteren Slaveeinrichtung dazu ausgebildet sein, die dritte Schalteinrichtung derart anzusteuern, dass ein Abschaltsignal in der Stromschleife erscheint.

Ein Abschaltsignal kann durch eine dauerhafte Unterbrechung der Stromschleife oder durch eine Unterbrechung definierter Zeitdauer realisiert werden.

Die erste, und/oder zweite und/oder dritte Auswerte- und Steuereinheit können jeweils dazu ausgebildet sein, unter Ansprechen auf einen empfangenen Abschaltimpuls den jeweiligen Ausgang abzuschalten. Da alle an die Stromschleife angeschlossenen Master- und Slaveeinrichtungen ein Abschaltsignal gleichzeitig empfangen, kann die Reaktionszeit des Datenübertragungssystems deutlich reduziert werden. Dies wird insbesondere auch dadurch erreicht, dass nicht nur die Mastereinrichtung, sondern auch die Slaveeinrichtungen ein Abschaltsignal in der Stromschleife erzeugen können.

Dank der Maßnahme, dass sowohl die Mastereinrichtung als auch die Slaveeinrichtungen Abschaltsignale über die Stromschleife an alle angeschlossenen Einrichtungen gleichzeitig signalisieren können, kann ein reaktionsschnelles und sicheres Datenübertragungssystem geschaffen werden.

Für den Fall, dass das Datenübertragungssystem sicherheitsrelevante Abschaltungen im Sinne der funktionalen Sicherheit ermöglichen soll, muss das Datenübertragungssystem eine Fehlersicherheit gewährleisten. Hierzu kann die erste Auswerte- und Steuereinheit der Mastereinrichtung die erste elektrische Energiequelle und/oder die erste Schalteinrichtung derart ein- und ausschalten, dass wenigstens ein Testimpuls vorbestimmter zeitlicher Länge in dem Stromkreis erscheint, dass die zweite Auswerte- und Steuereinheit der ersten Slaveeinrichtung dazu ausgebildet ist, unter Ansprechen auf einen empfangenen Testimpuls die zweite Schalteinrichtung derart anzusteuern, dass ein erster Antwortimpuls vorbestimmter zeitlicher Länge in der Stromschleife erscheint, der gegenüber dem Testimpuls um eine erste einstellbare Zeit verzögert ist, dass die dritte Auswerte- und Steuereinheit der wenigstens einen weiteren Slaveeinrichtung dazu ausgebildet ist, unter Ansprechen auf einen empfangenen Testimpuls die dritte Schalteinrichtung derart anzusteuern, dass ein zweiter Antwortimpuls vorbestimmter zeitlicher Länge in der Stromschleife erscheint, der gegenüber dem Testimpuls um eine zweite einstellbare Zeit verzögert ist. Die erste Auswerte- und Steuereinheit ist in diesem Fall dazu ausgebildet, den Empfang eines ersten- und/oder zweiten Antwortimpulses zu überwachen. Vorteilhafter Weise kann sie dann bei Ausbleiben wenigstens eines Antwortimpulses entsprechende Aktionen ausführen oder auslösen.

Angemerkt sei an dieser Stelle, dass die definierte Länge eines Testimpulses um eine definierte Länge von der definierten Länge eines Antwortimpulses abweicht. Vorzugsweise ist der Testimpuls länger als der Antwortimpuls.

Vorzugsweise erzeugt die erste Auswerte- und Steuereinheit in definierten Zeitintervallen Testimpulse.

Mit Hilfe der Testimpulse können die Slaveeinrichtungen die Verbindung zur Mastereinrichtung überprüfen und erkennen, ob die Mastereinrichtung noch funktionsfähig ist.

Dank der Antwortimpulse kann die Mastereinrichtung die Verbindung zu den Slaveeinrichtungen überprüfen und erkennen, ob die Slaveeinrichtungen funktionsfähig sind.

Die erste Slaveeinrichtung und/oder die wenigstens eine weitere Slaveeinrichtung können jeweils zu einer Eingabeeinrichtung erweitert werden, indem die erste Slaveeinrichtung wenigstens einen mit der zweiten Auswerte- und Steuereinheit verbundenen zweiten Eingang aufweist und/oder die wenigstens eine weitere Slaveeinrichtung wenigstens einen mit der dritten Auswerte- und Steuereinheit verbundenen dritten Eingang aufweist. An den jeweiligen Eingang kann ein Sensor, beispielsweise ein Positionsschalter, eine Lichtschranke, und dergleichen angeschlossen werden.

Von besonderem Vorteil ist, wenn sowohl die Mastereinrichtung als auch die Slaveeinrichtungen die Konfiguration des Datenübertragungssystems kennen. Dies kann dadurch sichergestellt werden, dass in der Mastereinrichtung die Anzahl der an die Stromschleife angeschlossene Slaveeinrichtungen, und/oder deren Gerätekennung und/oder deren Adresse und/oder deren Ort innerhalb des Datenübertragungssystems gespeichert sind, dass in jeder Slaveeinrichtung die Adresse, und/oder die Gerätekennung und/oder der Ort der Mastereinrichtung innerhalb des Datenübertragungssystems, die Anzahl der übrigen, an die Stromschleife angeschlossene Slaveeinrichtungen, und/oder deren Gerätekennung, und/oder deren Adresse, und/oder deren Ort innerhalb des Datenübertragungssystems gespeichert sind.

Die Flexibilität des Datenübertragungssystems kann dadurch erweitert werden, dass die Slaveeinrichtungen jeweils dazu ausgebildet ist, Daten gezielt zu der Mastereinrichtung und/oder zu wenigstens einer der anderen Slaveeinrichtungen zu übertragen, wobei die Mastereinrichtung dazu ausgebildet ist, gezielt Daten zu wenigstens einer der angeschlossenen Slaveeinrichtungen zu übertragen.

Auf diese Weise können Daten gezielt im Sinne einer Punktzu-Punkt-Verbindung zwischen wenigstens zwei an die Stromschleife angeschlossene Einrichtungen ausgetauscht werden.

Die Slaveeinrichtungen und die Mastereinrichtungen können strommodulierte Daten in Form von Steuerdaten, Prozessdaten, Parametrierungsdaten, Diagnosedaten und sicherheitsrelevanten Daten austauschen.

Um beispielsweise die Slaveeinrichtungen adressieren zu können, kann die Mastereinrichtung wenigstens eine weitere elektrische Energiequelle aufweisen, die parallel zur ersten elektrischen Energiequelle an die Stromschleife angeschlossen ist, wobei die erste und die wenigstens eine weitere elektrische Energiequelle unabhängig voneinander von der ersten Auswerte- und Steuereinheit ein- und ausschaltbar sind. Indem die erste Auswerte- und Steuereinrichtung gezielt das Einschalten und Ausschalten der ersten und/oder der wenigstens einen weiteren elektrischen Energiequelle veranlassen kann, kann eine Strommodulation zur Datenübertragung erzielt werden. Die erste und die wenigstens eine weitere elektrische Energiequelle können somit Bestandteil der Strommodulationseinrichtung der Mastereinrichtung sein.

Zweckmäßigerweise können die erste und die wenigstens eine weitere elektrische Energiequelle jeweils als Stromquelle ausgebildet sein, die jeweils einen vorbestimmten konstanten Nennstrom liefern. Die Nennströme können unterschiedlich sein.

Das oben genannte technische Problem wird ferner sowohl durch eine Mastereinrichtung als auch durcheine Slaveeinrichtung gelöst, die jeweils zum Einsatz in einem Datenübertragungssystem nach einem der Ansprüche 1 bis 13 ausgebildet sind.

Die Erfindung wird nachfolgend anhand eines Ausführungsbeispiels in Verbindung mit den beiliegenden Zeichnungen näher erläutert. Es zeigen:
- Fig. 1: das prinzipielle Blockschaltbild eines Datenübertragungssystems, in welchem die Erfindung verwirklicht ist,
- Fig. 2a: zwei von der Mastereinrichtung zyklisch erzeugte Testimpulse,
- Fig. 2b: den von einer ersten Slaveeinrichtung erzeugten Antwortimpuls als Antwort auf den ersten, in Fig. 2a gezeigten Testimpuls,
- Fig. 2c: den von einer zweiten Slaveeinrichtung erzeugten Antwortimpuls als Antwort auf den ersten, in Fig. 2a gezeigten Testimpuls, und
- Fig. 2d: den zeitlichen Verlauf des resultierenden Schleifenstroms während eines Testzyklus.

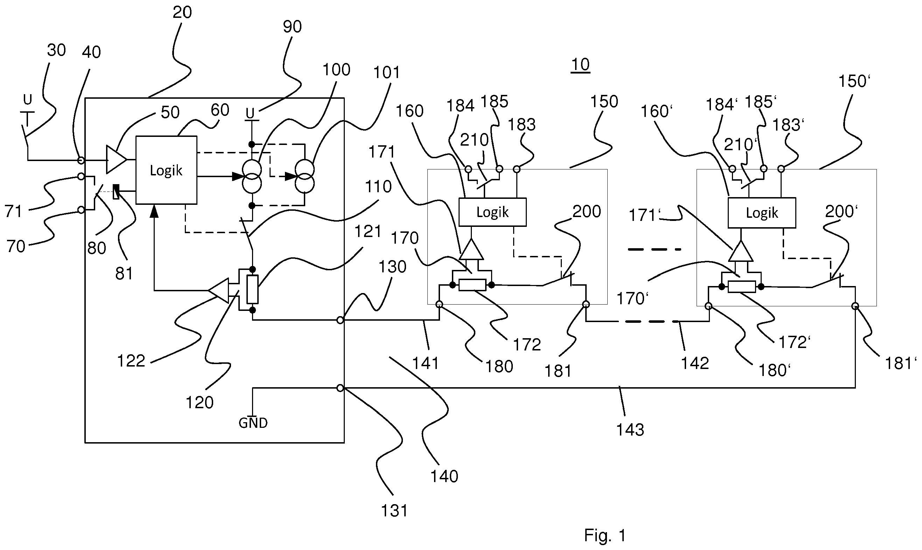

Figur 1 zeigt ein beispielhaftes Datenübertragungssystem 10, welches eine strommodulierte Übertragung von Daten von einer Mastereinrichtung 20 zu wenigstens einer Slaveeinrichtung 150 und umgekehrt ermöglicht. Das Datenübertragungssystem 10 kann beispielsweise Teil einer industriellen oder gebäudebasierten Automatisierungsanlage sein. Als Daten können zum Beispiel Steuerdaten, Prozessdaten, Parametrierungsdaten, Diagnosedaten und/oder sicherheitsrelevante Daten übertragen werden.

Beispielhaft enthält das Datenübertragungssystem 10 lediglich zwei Slaveeinrichtungen 150 und 150', wobei durch die drei Striche zwischen den Slaveeinrichtungen 150 und 150' angedeutet wird, dass das Datenübertragungssystem 10 auch mehr als zwei Slaveeinrichtungen aufweisen kann. Das beispielhafte Datenübertragungssystem 10 ist somit als Master-Slave-System konzipiert.

Das Datenübertragungssystem 10 weist eine Stromschleife 140 auf, an die die Mastereinrichtung 20 und die Slaveeinrichtungen 150 und 150' angeschlossen sind. Die Stromschleife 140 fungiert nur als Datenbus, der die Mastereinrichtung 20 und die Slaveeinrichtung 150 und 150' in Reihe miteinander verbindet. Die Energieversorgung des Datenübertragungssystems 10 und somit der Master- und Slaveeinrichtungen erfolgt über eine separate Energieversorgungseinrichtung (nicht dargestellt), die jedoch nicht Gegenstand der Erfindung ist.

Die Mastereinrichtung 20 weist zwei Anschlussklemmen 130 und 131 auf, an die Leitungsabschnitte 141 und 143 der Stromschleife 140 angeschlossen werden können. Die Anschlussklemme 131 ist mit Masse verbunden. Die Mastereinrichtung 20 weist ferner eine erste Auswerte- und Steuereinheit 60 auf, die in Figur 1 als Logikeinheit bezeichnet ist. Die Auswerte- und Steuereinheit 60 kann ein Mikrocontroller sein. Die Auswerte- und Steuereinheit 60 ist unter anderem dazu ausgebildet, einen externen Schaltzustand zu erfassen, welcher einen Ruhe- oder Arbeitszustand des Datenübertragungssystems 10 signalisiert. Hierzu kann die Mastereinheit 20 einen Eingang 40 aufweisen, an den eine erste Schalteinrichtung 30 angeschlossen werden kann, welche den externen Schaltzustand liefert. Bei der Schalteinrichtung 30 kann es sich beispielsweise um einen Not-Aus-Schalter handeln. Das von der Schalteinrichtung 30 erzeugte Signal kann über eine Signalaufbereitungseinheit 50 der Auswerte- und Steuereinheit 60 zugeführt werden. Weiterhin enthält die Mastereinrichtung 20 eine erste an die Stromschleife 140 angeschlossene, von der Auswerte- und Steuereinheit 60 ein- und ausschaltbare elektrische Energiequelle 100. Optional kann die Mastereinrichtung 20 wenigstens eine weitere elektrische Energiequelle 101 aufweisen, die parallel zur ersten elektrischen Energiequelle 100 an die Stromschleife 140 angeschlossen ist, wobei die erste und die wenigstens eine weitere elektrische Energiequelle 101 unabhängig voneinander unter Steuerung der ersten Auswerte- und Steuereinheit 60 ein- und ausschaltbar sind.

Zweckmäßigerweise können die erste und die wenigstens eine weitere elektrische Energiequelle jeweils als Stromquelle ausgebildet sein, die jeweils einen vorbestimmten konstanten Nennstrom liefern.

Bei der ersten elektrischen Energiequelle 100 und der wenigstens einen weiteren Energiequelle 101 kann es sich jeweils um eine ein- und ausschaltbare, spannungsgesteuerte Stromquelle handeln, die vorteilhafterweise jeweils einen unterschiedlichen konstanten Nennstrom bereitstellen können. Mit N parallelgeschalteten Stromquellen können somit im Knotenpunkt 130 2^{N}-1 unterschiedliche Ströme (ein Strom von 0A ist ausgeschlossen) unter Steuerung der Auswerte- und Steuereinheit 60 eingestellt werden. Auf diese Weise können zum Beispiel 2^{N}-1 Slaveeinrichtungen adressiert werden, indem jeder Slaveeinrichtung ein bestimmter einstellbarer Stromwert zugeordnet wird. Die unabhängig voneinander ansteuerbaren Stromquellen können in Verbindung mit der Auswerte- und Steuereinheit 60 als Bestandteil einer Strommodulationseinrichtung betrachtet werden. Den Stromquellen 100 und 101 kann jeweils eine durch die Auswerte- und Steuereinheit 60 ansteuerbare Schalteinrichtung (nicht dargestellt) zugeordnet sein, die ermöglichen, dass die Stromquellen 100 und 101 unabhängig voneinander ein- und ausgeschaltet werden können.

Die Steuerspannung für die erste Stromquelle 100 und die wenigstens eine weitere Stromquelle 101 wird beispielsweise über eine Spannungsquelle 90 bereitgestellt, die ebenfalls mit Masse verbunden ist.

Nunmehr wird angenommen, dass die weitere Stromquelle 101 ausgeschaltet ist oder fehlt. Unter Ansprechen auf einen erfassten Ruhezustand, d. h. die Schalteinrichtung 30 befindet sich in einem geöffneten Zustand, steuert die Auswerte- und Steuereinheit 60 die Stromquelle 100 derart an, dass die Stromquelle 100 der Stromschleife 140 einen vorbestimmen konstanten Ruhestrom, vorzugsweise einen definierten Gleichstrom einprägt.

Bereits an dieser Stelle sei angemerkt, dass die Auswerte- und Steuereinheit 60 dazu ausgebildet ist, die Stromquelle 100 derart ein- und auszuschalten, dass während des Betriebs zum Beispiel zyklisch Testimpulse über die Stromschleife 140 zu den Slaveeinrichtungen 150 und 150' übertragen werden können. Die Testimpulse werden jeweils durch eine gezielte Unterbrechung der Stromschleife 140, d.h. ein Ausschalten der Stromquelle 100, für eine definierte Zeitdauer realisiert. In ähnlicher Weise kann die Mastereinrichtung 20 ein Abschaltsignal erzeugen und über die Stromschleife 140 übertragen, wenn die Auswerte- und Steuereinheit 60 festgestellt hat, dass die Schalteinrichtung 30 geschlossen worden ist. Hierdurch wird ein Arbeitszustand bzw. ein Alarmzustand signalisiert.

Ferner weist die Mastereinrichtung 20 eine in die Stromschleife 140 geschaltete Strommodulationseinrichtung 110 auf, welche dazu ausgebildet ist, den in der Stromschleife 140 fließenden Ruhestrom in Abhängigkeit von einem Steuersignal, welches von der ersten Auswerte- und Steuereinheit 60 bereitgestellt wird, zu modulieren, um Daten über die Stromschleife 140 zu wenigstens einem der Slaveeinrichtungen 150 und 150' zu übertragen. Bei dem gezeigten Beispiel wird die Strommodulationseinrichtung 110 durch eine erste Schalteinrichtung realisiert. Die Stromquelle 100 kann insbesondere zur strommodulierten Informationsübertragung ein- und ausgeschaltet werden. Alternativ oder zusätzlich kann eine strommodulierte Datenübertragung durch ein gezieltes Ein- und Ausschalten der ersten Schalteinrichtung 110 erfolgen.

Weiterhin enthält die Mastereinrichtung 20 eine in die Stromschleife 140 geschaltete Strommesseinrichtung 120, welche mit der Auswerte- und Steuereinheit 60 verbunden ist. Die Auswerte- und Steuereinheit 60 ist dazu ausgebildet, den von der Strommesseinrichtung 120 gemessenen Strom auszuwerten und in Abhängigkeit von dem Auswerteergebnis eine definierte Aktion auszuführen oder auszulösen. Die Strommesseinrichtung 120 kann durch einen in die Stromschleife geschalteten Widerstand 121 und einen an den Widerstand 121 angeschlossenen Differenzverstärker 122 realisiert werden. Der Ausgang des Differenzverstärkers ist mit einem Eingang der Auswerte- und Steuereinheit 60 verbunden. Der Differenzverstärker 122 misst in an sich bekannter Weise die über den Messwiderstand 121 abfallende Spannung, welche proportional zu dem durch die Stromschleife 140 fließenden Strom ist. Die Schalteinrichtung 110 und die Strommesseinrichtung 120 können in Reihe mit der ersten Stromquelle 100 geschaltet sein. Die Auswerte- und Steuereinheit 60 kann ferner dazu ausgebildet sein, den von der Strommesseinrichtung 120 gemessenen Strom als Adresse zu interpretieren.

Die Mastereinrichtung 20 kann wenigstens einen von der ersten Auswerte- und Steuereinheit 60 ansteuerbaren Ausgang aufweisen, welcher in Fig. 1 durch Ausgangsklemmen 70 und 71 dargestellt ist. Der Ausgang kann durch eine durch die Auswerte- und Steuereinheit 60 ansteuerbare Schalteinrichtung, insbesondere ein Relais realisiert sein, welches in der Figur 1 durch einen Schalter 80 und eine Erregerspule 81 symbolisiert ist. Die Erregerspule 81 kann von der Spannungsquelle 90 gespeist werden. An die Ausgangsklemmen 70 und 71 kann ein Aktor (nicht dargestellt) angeschlossen werden. Bei dem Aktor kann es sich um eine Maschine, ein Maschinenteil, beispielsweise einen Roboter einer Automatisierungsanlage handeln, der bei Anforderung oder im Fehlerfall sicher abgeschaltet werden muss.

Die Slaveeinrichtung 150 enthält eine Auswerte- und Steuereinheit 160, welche auch als zweite Auswerte- und Steuereinheit 160 bezeichnet werden kann. Auch die Auswerte- und Steuereinheit 160 kann durch einen Mikrocontroller realisiert werden. Weiterhin enthält die Slaveeinrichtung 150 eine in die Stromschleife geschaltete zweite Strommodulationseinrichtung 200, welche dazu ausgebildet ist, den Ruhestrom in der Stromschleife 140 in Abhängigkeit von einem Steuersignal, welches von der zweiten Auswerte- und Steuereinheit 160 bereitgestellt wird, zu modulieren, um Daten zur Slaveeinrichtung 150' und/oder zur Mastereinrichtung 20 über die Stromschleife 140 zu übertragen. Ähnlich der Strommodulationseinrichtung 110 kann die Strommodulationseinrichtung 200 durch eine durch die Auswerte- und Steuereinheit 160 gesteuerte Schalteinrichtung realisiert werden.

Die Slaveeinrichtung 150 weist ferner eine in die Stromschleife 140 geschaltete zweite Strommesseinrichtung 170 auf, welche mit der zweiten Auswerte- und Steuereinheit 160 verbunden ist. Die Strommesseinrichtung 170 kann einen in die Stromschleife 140 geschalteten Messwiderstand 172 aufweisen, wobei die über den Messwiderstand 172 abfallende Spannung mittels eines Differenzverstärkers 171 abgegriffen wird. Der Ausgang des Differenzverstärkers 171 ist mit der Auswerte- und Steuereinheit 160 verbunden.

Die Auswerte- und Steuereinheit 160 der Slaveeinrichtung 150 ist dazu ausgebildet, den von der Strommesseinrichtung 170 gemessenen Strom auszuwerten und in Abhängigkeit von dem Auswerteergebnis eine definierte Aktion auszuführen oder auszulösen. Die Auswerte- und Steuereinheit 160 kann ferner dazu ausgebildet sein, den von der Strommesseinrichtung 170 gemessenen Strom als Adresse zu interpretieren.

Damit das Datenübertragungssystem 10 unabhängig von der Mastereinrichtung 20 vollständig oder teilweise abgeschaltet werden kann, weist die Slaveeinrichtung 150 die in den Stromkreis 140 geschaltete zweite Schalteinrichtung 200 auf, welche unter Ansprechen auf ein Steuersignal der zweiten Auswerte- und Steuereinheit 160 die Stromschleife gezielt öffnen bzw. unterbrechen kann, um ein Abschaltsignal über die Stromschleife 140 zu übertragen. Mittels der Schalteinrichtung 200 kann die Slaveeinrichtung 150 auch einen Antwortimpuls definierter Länge erzeugen, wenn die Auswerte- und Steuereinheit 160 einen Testimpuls von der Mastereinrichtung 20 erkannt hat.

Ferner weist die Slaveeinrichtung 150 zwei Anschlüsse 180 und 181 auf, über die sie in die Stromschleife 140 eingeschleift werden kann. Hierbei bilden vorzugsweise der Messwiderstand 172 und die Schalteinrichtung 200 eine einfache und kostengünstig realisierbare Stromschnittstelle der Slaveeinrichtung 150. Wie in Figur 1 zu sehen, ist der Anschluss 130 der Mastereinrichtung 20 über einen Leiterabschnitt 141 mit dem Eingang 180 der ersten Slaveeinrichtung 150 verbunden. Der zweite Anschluss 181 der Slaveeinrichtung 150 ist über einen Leiterabschnitt 142 der Stromschleife 140 mit einem Eingang 180' der zweiten Slaveeinrichtung 150' verbunden.

Die Slaveeinrichtung 150 kann wenigstens einen durch die zweite Auswerte- und Steuereinheit 160 ansteuerbaren zweiten Ausgang aufweisen, der durch Ausgangsklemmen 184 und 185 dargestellt ist. Symbolisch ist der ansteuerbare Ausgang durch einen Schalter 210 realisiert. An die Ausgangsanschlüsse 184 und 185 kann wiederum ein Aktor, beispielsweise ein Roboter, eine Maschine oder ähnliches angeschlossen werden. Weiterhin kann die Slaveeinrichtung 150 wenigstens einen Eingang aufweisen, der symbolisch durch einen Eingangsanschluss 183 dargestellt ist. An den Eingang kann ein Sensor, beispielsweise ein Positionsschalter, ein Lichtgitter und dergleichen angeschlossen werden, welche einen Prozess überwachen können.

Die Slaveeinrichtung 150' kann ähnlich der Slaveeinrichtung 150 aufgebaut sein.

So kann die Slaveeinrichtung 150' eine Auswerte- und Steuereinheit 160', welche auch als dritte Auswerte- und Steuereinheit 160' bezeichnet werden kann. Auch die Auswerte- und Steuereinheit 160' kann durch einen Mikrocontroller realisiert werden. Weiterhin enthält die Slaveeinrichtung 150' eine in die Stromschleife geschaltete dritte Strommodulationseinrichtung 200', welche dazu ausgebildet ist, den Ruhestrom in der Stromschleife 140' in Abhängigkeit von einem Steuersignal, welches von der dritten Auswerte- und Steuereinheit 160' bereitgestellt wird, zu modulieren, um Daten zur Slaveeinrichtung 150 und/oder zur Mastereinrichtung 20 über die Stromschleife 140 zu übertragen. Ähnlich der Strommodulationseinrichtung 200 kann die Strommodulationseinrichtung 200' durch einen durch die Auswerte- und Steuereinheit 160' gesteuerte Schalteinrichtung 200' realisiert werden.

Die Slaveeinrichtung 150' weist ferner eine in die Stromschleife 140 geschaltete dritte Strommesseinrichtung 170' auf, welche mit der Auswerte- und Steuereinheit 160' verbunden ist. Die Strommesseinrichtung 170' kann einen in die Stromschleife 140 geschalteten Messwiderstand 172' aufweisen, wobei die über den Messwiderstand 172' abfallende Spannung mittels eines Differenzverstärkers 171' abgegriffen wird. Der Ausgang des Differenzverstärkers 171' ist mit der Auswerte- und Steuereinheit 160' verbunden.

Die Auswerte- und Steuereinheit 160' der Slaveeinrichtung 150' ist dazu ausgebildet, den von der Strommesseinrichtung 170' gemessenen Strom auszuwerten und in Abhängigkeit von dem Auswerteergebnis eine definierte Aktion auszuführen oder auszulösen. Die Auswerte- und Steuereinheit 160' kann ferner dazu ausgebildet sein, den von der Strommesseinrichtung 170' gemessenen Strom als Adresse zu interpretieren.

Damit das Datenübertragungssystem 10 unabhängig von der Mastereinrichtung 20 vollständig oder teilweise abgeschaltet werden kann, weist die Slaveeinrichtung 150' die in den Stromkreis 140 geschaltete dritte Schalteinrichtung 200' auf, welche unter Ansprechen auf ein Steuersignal der Auswerte- und Steuereinheit 160' die Stromschleife 140 gezielt öffnen bzw. unterbrechen kann, um ein Abschaltsignal über die Stromschleife 140 zu übertragen. Mittels der Schalteinrichtung 200' kann die Slaveeinrichtung auch einen Antwortimpuls definierter Länge erzeugen, wenn die Auswerte- und Steuereinheit 160' einen Testimpuls von der Mastereinrichtung 20 erkannt hat.

Ferner weist die Slaveeinrichtung 150' die beiden Anschlüsse 180' und 181' auf, über die sie in die Stromschleife 140 eingeschleift werden kann. Hierbei bilden vorzugsweise der Messwiderstand 172', der Modulationswiderstand 190' und die Schalteinrichtung 200' eine einfache und kostengünstig realisierbare Stromschnittstelle der Slaveeinrichtung 150'. Der Ausgangsanschluss 181' der Slaveeinrichtung 150' ist über einen Leiterabschnitt 143 der Stromschleife 140 mit dem Anschluss 131 der Mastereinrichtung 20 verbunden.

Die Slaveeinrichtung 150' kann zudem wenigstens einen durch die Auswerte- und Steuereinheit 160' ansteuerbaren dritten Ausgang aufweisen, der durch Ausgangsklemmen 184' und 185' dargestellt ist. Symbolisch ist der ansteuerbare Ausgang durch einen Schalter 210' realisiert. An die Ausgangsanschlüsse 184' und 185' kann wiederum ein Aktor, beispielsweise ein Roboter, eine Maschine oder ähnliches angeschlossen werden. Weiterhin kann die Slaveeinrichtung 150' wenigstens einen Eingang aufweisen, der symbolisch durch einen Eingangsanschluss 183' dargestellt ist. An den Eingang kann ein Sensor, beispielsweise ein Positionsschalter, ein Lichtgitter und dergleichen angeschlossen werden, welche einen Prozess überwachen können.

Sowohl die beispielhaft erläuterten Slaveeinrichtungen 150 und 150' als auch die beispielhafte Mastereinrichtung 20 üben in dem Datenübertragungssystem 10 jeweils auch die Funktion eines E/A-Geräts aus.

Angemerkt sei noch, dass die Stromquelle 100 und, sofern vorhanden, die wenigstens eine weitre Stromquelle 101, die Schalteinrichtung 110, der Messwiderstand 121, der Leiterabschnitt 141, der Messwiderstand 172, die Schalteinrichtung 200, der Leiterabschnitt 142, der Strommesswiderstand 172', die Schalteinrichtung 200' und der Leiterabschnitt 143 einen Stromkreis bilden, dem im Ruhezustand des Datenübertragungssystems 10 ein definierter, konstanter Ruhestrom eingeprägt wird.

Ferner sei noch angemerkt, dass die strommodulierte Datenübertragung über die Stromschleife 140 mittels einer gezielten Unterbrechung der Stromschleife 140 ermöglicht wird. Eine Unterbrechung der Stromschleife 140 kann durch ein Ausschalten der Stromquelle 100 zum Beispiels durch ein Öffnen der Schalteinrichtung 200 und/oder der Schalteinrichtung 200' erreicht werden.

Nachfolgend wird die Funktionsweise des in Figur 1 gezeigten beispielhaften Datenübertragungssystems 10 näher erläutert. Zunächst sei wieder angenommen, dass nur die Stromquelle 1 verwendet wird, d.h., die weitere Stromquelle ist entweder ausgeschaltet oder nicht vorhanden.

Zunächst sei angenommen, dass die Mastereinrichtung 20 die Anzahl aller an die Stromschleife 140 angeschlossenen Slaveeinrichtungen kennt. Beim vorliegenden Beispiel sind lediglich die beiden Slaveeinrichtungen 150 und 150' an die Stromschleife 140 angeschlossen. Die Anzahl der angeschlossenen Slaveeinrichtungen kann in der Mastereinrichtung 20 beispielsweise vor Inbetriebnahme manuell eingegeben werden. Alternativ ist denkbar, dass während einer Initialisierungsphase die Mastereinrichtung 20 die Slaveeinrichtungen auffordern kann, sich zu melden. Die Anzahl empfangener Meldeinformationen entspricht dann der Anzahl der angeschlossenen Slaveeinrichtungen. Auf diese Weise können die Slaveeinrichtungen 150 und 150' auch ihre, sofern vorhanden, Adressen zur Mastereinrichtung 20 übertragen und die Mastereinrichtung 20 ihre Adresse zu den Slaveeinrichtungen 150 und 150' übertragen. Alternativ kann die Mastereinrichtung 20 die beiden unabhängig voneinander ansteuerbare Stromquellen 100 und 101, sofern vorhanden, verwenden, um die Slaveeinrichtungen zu adressieren.

Weiterhin sei angenommen, dass in der Slaveeinrichtung 150 eine erste Verzögerungszeit hinterlegt ist, die definiert, wann die Slaveeinrichtung 150 nach Empfang eines Testimpulses von der Mastereinrichtung 20 einen Antwortimpuls erzeugen soll. In ähnlicher Weise ist in der Slaveeinrichtung 150' eine zweite Verzögerungszeit hinterlegt ist, die definiert, wann die Slaveeinrichtung 150' nach Empfang eines Testimpulses von der Mastereinrichtung 20 einen Antwortimpuls erzeugen soll. Die zweite Verzögerungszeit ist aufgrund der physikalischen Reihenfolge der Slaveeinrichtungen bezüglich der Mastereinrichtung 20 länger als die erste Verzögerungszeit. Je nach Implementierung kann die Mastereinrichtung 20 auch automatisch die erste Verzögerungszeit und die zweite Verzögerungszeit berechnen oder fest vorgegebene erste und zweite Verzögerungszeiten aus einem Speicher auslesen und unter Verwendung der Adressen der Slaveeinrichtungen 150 und 150' die erste Verzögerungszeit über die Stromschleife 140 zur Slaveeinrichtung 150 und die zweite Verzögerungszeit zur Slaveeinrichtung 150' zu übertragen, indem die Schalteinrichtung 110 entsprechend angesteuert wird.

Die Slaveeinrichtungen 150 und 150' sind dann dazu ausgebildet, aus dem strommodulierten Ruhestrom der Stromschleife 140 die an sie adressierte erste bzw. zweite Verzögerungszeit zu empfangen und zu speichern.

Außerdem ist in der Mastereinrichtung 20 ein Zeitfenster bestimmter Länge gespeichert, innerhalb dessen die Mastereinrichtung 20 Antwortimpulse der Slaveeinrichtungen als Antwort auf einen Testimpuls erwartet. In ähnlicher Weise ist in den beiden Slaveeinrichtungen 150 und 150' jeweils ein Zeitfenster definierter Länge abgespeichert, innerhalb dessen die jeweilige Slaveeinrichtung den Empfang eines Testimpulses erwartet.

Nunmehr sei angenommen, dass der Not-Aus-Schalter 30 geschlossen ist und das Datenübertragungssystem 10 im Normalbetrieb, d. h. im Ruhezustand betrieben wird. In diesem Fall liefert die Stromquelle 100 den definierten, konstanten Ruhestrom, während die Schalteinrichtungen 200 und 200' geschlossen sind, wie dies in Figur 1 dargestellt ist.

Weiterhin sei angenommen, dass bei dem in Figur 1 gezeigten Datenübertragungssystem 10 sicherheitsrelevante Abschaltungen im Sinne der funktionalen Sicherheit erfolgen sollen. Hierzu ist erforderlich, dass das Datenübertragungssystem 10 so erweitert wird, dass eine Einfehlersicherheit gewährleistet werden kann. Beispielsweise müssen Fehler in der Verdrahtung bzw. Stromschleife 140, in der Mastereinrichtung 20 und in den Slaveeinrichtungen 150 und 150' erkannt werden, die nicht zum Verlust der funktionalen Sicherheit führen dürfen.

Zu diesem Zweck kann, wie bereits erwähnt, die Auswerte- und Steuereinheit 60 der Mastereinrichtung 20 die Stromquelle 100 und/oder die erste Schalteinrichtung 110 derart ein- und ausschalten, dass während eines fehlerfreien Betriebs wenigstens ein Testimpuls dem Ruhestrom aufmoduliert wird bzw. in der Stromschleife 140 erscheint. Vorzugsweise wird die Stromquelle 100 derart ein- und ausgeschaltet, dass zyklisch Testimpulse definierter Länge erzeugt werden. Alternativ oder zusätzlich kann die Stromschleife 140 mit Hilfe der Schalteinrichtung 110 entsprechend unterbrochen und geschlossen werden, wodurch zyklisch Testimpulse definierter Länge erzeugt werden.

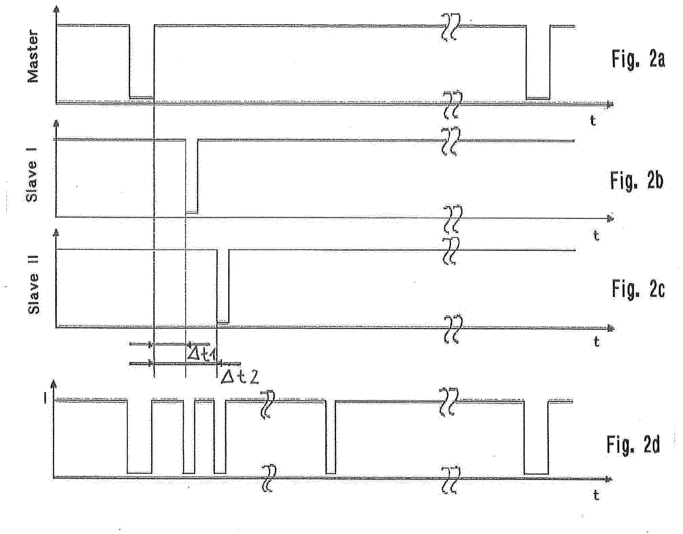

In Figur 2a ist der modulierte Stromverlauf durch die Stromschleife 140 gezeigt, der durch zwei zyklische, von der Mastereinrichtung 20 erzeugte Testimpulse hervorgerufen wird. Die Mastereinrichtung 20 triggert nach jeder Übertragung eines Testimpulses das Zeitfenster (timeout), innerhalb dessen die Antwortimpulse der Slaveeinrichtungen 150 und 150' erwartet werden.

Angenommen sei, dass die die Testimpulse übertragenden Stromschwankungen des Ruhestroms von den Strommesseinrichtungen 172 und 172' der Slaveeinrichtungen 150 und 150' gemessen und von Auswerte- und Steuereinheit 160 beziehungsweise 160' innerhalb des definierten Zeitfensters als Testimpuls erkannt worden sind. Unter Ansprechen auf einen empfangen Testimpuls wird der Schalter 200 von der Auswerte- und Steuereinheit 160 nach Ablauf der ersten Verzögerungszeit für eine definierte Zeit, die kürzer als die Zeitdauer des Testimpulses ist, geöffnet, um den Antwortimpuls der Slaveeinrichtung 150 dem Ruhestrom aufzumodulieren. Dieses Verhalten ist schematisch durch den in Fig. 2b gezeigten Ruhestromverlauf dargestellt. In ähnlicher Weise wird unter Ansprechen auf einen empfangen Testimpuls der Schalter 200' von der Auswerte- und Steuereinheit 160' nach Ablauf der zweiten Verzögerungszeit für eine definierte Zeit, die kürzer als die Zeitdauer des Testimpulses ist, geöffnet, um den Antwortimpuls der Slaveeinrichtung 150' dem Ruhestrom aufzumodulieren. Dieses Verhalten ist schematisch durch den in Fig. 2c gezeigten Ruhestromverlauf dargestellt. Der resultierende modulierte Ruhestrom während eines ersten Testzyklus ist in Fig. 2d gezeigt.

Angenommen sei weiterhin, dass die die Antwortimpulse übertragenden Stromschwankungen des Ruhestroms von der Strommesseinrichtung 120 der Mastereinrichtung 20 gemessen und von Auswerte- und Steuereinheit 60 innerhalb des definierten Zeitfensters als Antwortimpulse erkannt worden sind. Dank dieser Maßnahme können die Slaveeinrichtungen 150 und 150' die Verbindung zur Mastereinrichtung 20 überprüfen und, wie im erläuterten Fall erkennen, dass die Mastereinrichtung 20 funktioniert.

Würde hingegen die Slaveeinrichtung 150 einen Testimpuls nicht innerhalb des definierten Zeitfensters erkennen, schaltet die Auswerte- und Steuereinheit 160 den Ausgang 210 ab und öffnet den Schalter 200, um eine Abschaltungsaufforderung gleichzeitig der Slaveeinrichtung 150' und der Mastereinrichtung zu signalisieren. Ferner kann dank dieser Maßnahme die Mastereinrichtungen 20' die Verbindung zu den Slaveeinrichtungen 150 und 150' überprüfen und, wie im erläuterten Fall erkennen, dass die Slaveeinrichtungen funktioniert.

Würde hingegen die Mastereinrichtung 20 einen Antwortimpuls der Slaveeinrichtung 150 und/oder der Slaveeinrichtung 150' nicht innerhalb des definierten Zeitfensters erkennen, schaltet die Auswerte- und Steuereinheit 60 den Ausgang 70, 71 sowie die Stromquelle 100 dauerhaft ab, um eine Abschaltungsaufforderung gleichzeitig der Slaveeinrichtung 150' und der Mastereinrichtung zu signalisieren.

Auf diese Weise können Schaltinformationen, Verdrahtungsfehler, Systemfehler und dergleichen gleichzeitig zwischen der Mastereinrichtung 20 und den Slaveeinrichtungen 150 und 150' in beide Richtungen ausgetauscht werden. Denn eine Unterbrechung der Stromschleife 140 kann nahezu sofort und gleichzeitig von der Mastereinrichtung 20 und den Slaveeinrichtungen erkannt und ausgewertet werden, um definierte Aktionen auszulösen oder auszuführen.

Nunmehr wird ein Szenario betrachtet, bei dem der Not-Aus-Schalter 30 geöffnet wird. Diesen Arbeitszustand detektiert die Auswert- und Steuereinheit 60 als Alarmzustand, woraufhin sie beispielsweise den Ausgang 70, 71 öffnet und einen angeschlossenen Aktor abschalten kann. Gleichzeitig schaltet die Auswerte- und Steuereinheit 60 die Stromquelle 100 ab und/oder öffnet die Schalteinrichtung 110, so dass die Stromschleife 140 vorübergehend unterbrochen wird. Die Unterbrechung der Stromschleife 140 wird unverzüglich und gleichzeitig an dem Messwiderstand 172 der Slaveeinrichtung 150 und dem Messwiderstand 172' der Slaveeinrichtung 150' detektiert und über den Differenzverstärker 171 der Auswerte- und Steuereinheit 160 beziehungsweise über den Differenzverstärker 171' der Auswert- und Steuereinheit 160' signalisiert. Die detektierte Unterbrechung der Stromschleife 140 wird von den Auswerte- und Steuereinheiten 160 beziehungsweise 160' als Abschaltaufforderung interpretiert, woraufhin die Ausgänge 184, 185 und 184', 185' geöffnet bzw. abgeschaltet werden.

Gemäß einem zweiten Szenario sei zunächst wieder angenommen, dass das Datenübertragungssystem 10 im Normalbetrieb arbeitet. Weiterhin sei angenommen, dass die Auswerte- und Steuereinheit 160 der Slaveeinrichtung 150 einen fehlerhaften Betrieb der Slaveeinrichtung 150 erfasst hat. Unter Ansprechen auf den fehlerhaften Betrieb der Slaveeinrichtung 150 schaltet die Auswerte- und Steuereinheit 160 lediglich Ausgang 183 und 184 ab und sendet eine Fehlermeldung an die Mastereinrichtung 20, indem sie zur Modulation des Ruhestroms die Schalteinrichtung 200 entsprechend ansteuert. Die Mastereinrichtung 20 ist dazu ausgebildet, die Fehlermeldung zu erkennen und eine vorbestimmte Aktion auszulösen oder auszuführen. Insbesondere kann sie dafür sorgen, dass keine Daten mehr zu Slaveeinrichtung 150 übertragen werden. Der Betrieb des Datenübertragungssystems 10 kann aber, je nach Implementierung fortgesetzt werden.

Dank des speziellen Datenübertragungssystems 10 können Testimpulse und Antwortimpulse während eines Testverfahren, und Abschaltsignale bzw. Abschaltaufforderungen von der Mastereinrichtung 20 und den Slaveeinrichtungen 150, 150' sicher übertragen und erkannt werden, indem die Stromschleife entsprechend unterbrochen wird.

Andere Daten, wie zum Beispiel Diagnosedaten, Parametrierungsdaten, wie zum Beispiel Verzögerungszeiten und Zeitfenster, oder Reset-Signale können mittels einem gesteuerten Öffnen und Schließen der Stromschleife unter Verwendung der Schalteinrichtungen 110, 200 und 200'zwischen der Mastereinrichtung und den Slaveeinrichtungen ausgetauscht werden

## Patentansprüche

1. Datenübertragungssystem (10) zur strommodulierten Übertragung von Daten zwischen einer Mastereinrichtung (20) und wenigstens einer Slaveeinrichtung (150, 150'), wobei das Datenübertragungssystem (10) in einer sicherheitsgerichteten Automatisierungsanlage einsetzbar ist und folgende Merkmale aufweist:
- eine Stromschleife (140), die nur zur Datenübertragung ausgebildet ist,
- eine Mastereinrichtung (20) mit
einer ersten Auswerte- und Steuereinheit (60), die zum Erfassen eines externen Schaltzustands ausgebildet ist, welcher einen Ruhe- oder Arbeitszustand signalisiert,
einer ersten an die Stromschleife (140) angeschlossenen, von der ersten Auswerte- und Steuereinheit (60) ein- und ausschaltbaren elektrischen Energiequelle (100), welche bei einem von der ersten Auswerte- und Steuereinheit (60) erfassten Ruhezustand einen vorbestimmten konstanten Ruhestrom durch die Stromschleife (140) treibt,
einer in die Stromschleife (140) geschalteten ersten Strommodulationseinrichtung (110), welche dazu ausgebildet ist, den Ruhestrom in Abhängigkeit von einem Steuersignal, welches von der ersten Auswerte- und Steuereinheit (60) bereitgestellt wird, zu modulieren, um Daten über die Stromschleife (140) zu übertragen,
einer in die Stromschleife (140) geschalteten ersten Strommesseinrichtung (120), welche mit der ersten Auswerte- und Steuereinheit (60) verbunden ist, wobei die erste Auswerte- und Steuereinheit (60) dazu ausgebildet ist, den von der ersten Strommesseinrichtung (120) gemessenen Strom auszuwerten und in Abhängigkeit von dem Auswerteergebnis eine definierte Aktion auszuführen oder auszulösen, wobei
die Strommesseinrichtung (120) und die Strommodulationseinrichtung (110) in Reihe geschaltet sind,
- eine erste Slaveeinrichtung (150) enthaltend eine zweite Auswerte- und Steuereinheit (160), eine in die Stromschleife (140) geschaltete zweite Strommodulationseinrichtung (200), welche dazu ausgebildet ist, den Ruhestrom in Abhängigkeit von einem Steuersignal, welches von der zweiten Auswerte- und Steuereinheit (160) bereitgestellt wird, zu modulieren, um Daten über die Stromschleife (140) zu übertragen, und
eine in die Stromschleife (140) geschaltete zweite Strommesseinrichtung (170), welche mit der zweiten Auswerte- und Steuereinheit (160) verbunden ist, wobei die zweite Auswerte- und Steuereinheit (160) dazu ausgebildet ist, den von der zweiten Strommesseinrichtung (170) gemessenen Strom auszuwerten und in Abhängigkeit von dem Auswerteergebnis eine definierte Aktion auszuführen oder auszulösen, wobei
die Strommesseinrichtung (170) und die Strommodulationseinrichtung (200) in Reihe geschaltet sind.

2. Datenübertragungssystem nach Anspruch 1,
**gekennzeichnet durch**
wenigstens eine weitere Slaveeinrichtung (150') enthaltend:
eine dritte Auswerte- und Steuereinheit (160'),
eine in die Stromschleife (140) geschaltete dritte Strommodulationseinrichtung (200'), welche dazu ausgebildet ist, den Ruhestrom in Abhängigkeit von einem Steuersignal, welches von der dritten Auswerte- und Steuereinheit (160') bereitgestellt wird, zu modulieren, um Daten zu übertragen, und
eine in die Stromschleife (140) geschaltete dritte Strommesseinrichtung (170'), welche mit der dritten Auswerte- und Steuereinheit (160') verbunden ist,
wobei die dritte Auswerte- und Steuereinheit (160') dazu ausgebildet ist, den an der dritten Strommesseinrichtung (170') gemessenen Strom auszuwerten und in Abhängigkeit von dem Auswerteergebnis eine definierte Aktion auszuführen oder auszulösen, wobei
die Strommesseinrichtung (170') und die Strommodulationseinrichtung (200') in Reihe geschaltet sind,.

3. Datenübertragungssystem nach Anspruch 1 oder 2,
**dadurch gekennzeichnet, dass**
die erste Strommodulationseinrichtung (110) der Mastereinrichtung (20) eine erste Schalteinrichtung (110) aufweist, welche unter Ansprechen auf ein Steuersignal der Auswerte- und Steuereinheit (60) der Mastereinrichtung (20) die Stromschleife (140) öffnen und schließen kann, und/oder dass
die zweite Strommodulationseinrichtung (190) der ersten Slaveeinrichtung (150) eine zweite Schalteinrichtung (200) aufweist, welche unter Ansprechen auf ein Steuersignal der Auswerte- und Steuereinheit (160) der ersten Slaveeinrichtung (150) die Stromschleife (140) öffnen und schließen kann, und/oder dass
die dritte Strommodulationseinrichtung (190') der zweiten Slaveeinrichtung (150') eine dritte Schalteinrichtung (200') aufweist, welche unter Ansprechen auf ein Steuersignal der Auswerte- und Steuereinheit (160') der zweiten Slaveeinrichtung (150') die Stromschleife (140) öffnen und schließen kann.

4. Datenübertragungssystem nach einem der vorstehenden Ansprüche,
**dadurch gekennzeichnet, dass**
die erste Strommesseinrichtung (120), die zweite Strommesseinrichtung (170) und die dritte Strommesseinrichtung (170') jeweils einen Messwiderstand (121, 172, 172') und einen Differenzverstärker (122, 171, 171'), welcher mit der jeweiligen Auswerte- und Steuereinheit (60, 160, 160') verbunden ist, aufweisen.

5. Datenübertragungssystem nach einem der vorstehenden Ansprüche,
**dadurch gekennzeichnet, dass**
die Mastereinrichtung (20) wenigstens einen ersten, mit der ersten Auswerte- und Steuereinheit (60) verbundenen Eingang (40) aufweist, an den eine vierte Schalteinrichtung (30) angeschlossen ist, welche den externen Schaltzustand liefert.

6. Datenübertragungssystem nach einem der vorstehenden Ansprüche,
**dadurch gekennzeichnet, dass**
die Mastereinrichtung (20) wenigstens einen von der ersten Auswerte- und Steuereinheit (60) ansteuerbaren ersten Ausgang (70, 71) aufweist, und/oder dass die erste Slaveeinrichtung (150) wenigstens einen von der zweiten Auswerte- und Steuereinheit (160) ansteuerbaren zweiten Ausgang (184, 185) aufweist, und/oder dass
die wenigstens eine weitere Slaveeinrichtung (150') wenigstens einen von der dritten Auswerte- und Steuereinheit (160) ansteuerbaren dritten Ausgang (184', 185') aufweist.

7. Datenübertragungssystem nach Anspruch 6 ,
**dadurch gekennzeichnet, dass**
die erste Auswerte- und Steuereinheit (60) der Mastereinrichtung (20) die erste elektrische Energiequelle (100) und/oder die erste Schalteinrichtung derart ein- und ausschalten kann, dass ein Abschaltsignal in der Stromschleife (140) erscheint, und/oder dass
die zweite Auswerte- und Steuereinheit (160) der ersten Slaveeinrichtung (150) dazu ausgebildet ist, die zweite Schalteinrichtung (200) derart anzusteuern, dass ein Abschaltsignal in der Stromschleife (140) erscheint, und/oder dass
die dritte Auswerte- und Steuereinheit (160') der wenigstens einen weiteren Slaveeinrichtung (150') dazu ausgebildet ist, die dritte Schalteinrichtung (200') derart anzusteuern, dass ein Abschaltsignal in der Stromschleife (140) erscheint, und dass die erste und/oder zweite und/oder dritte Auswerte- und Steuereinheit jeweils dazu ausgebildet ist, unter Ansprechen auf ein empfangenes Abschaltsignal den jeweiligen Ausgang abzuschalten.

8. Datenübertragungssystem nach einem der vorstehenden Ansprüchen,
**dadurch gekennzeichnet, dass**
die erste Auswerte- und Steuereinheit (60) der Mastereinrichtung (20) die erste elektrische Energiequelle (100) und/oder die erste Schalteinrichtung (110) derart ein- und ausschalten kann, dass wenigstens ein Testimpuls in der Stromschleife (140) erscheint, dass
die zweite Auswerte- und Steuereinheit (160) der ersten Slaveeinrichtung (150) dazu ausgebildet ist, unter Ansprechen auf einen empfangenen Testimpuls die zweite Schalteinrichtung (200) derart anzusteuern, dass ein erster Antwortimpuls in der Stromschleife (140) erscheint, der gegenüber dem Testimpuls um eine erste einstellbare Zeit verzögert ist, dass die dritte Auswerte- und Steuereinheit (160') der wenigstens einen weiteren Slaveeinrichtung (150') dazu ausgebildet ist, unter Ansprechen auf einen empfangenen Testimpuls die dritte Schalteinrichtung (200') derart anzusteuern, dass ein zweiter Antwortimpuls in der Stromschleife (140) erscheint, der gegenüber dem Testimpuls um eine zweite einstellbare Zeit verzögert ist, und dass die erste Auswerte- und Steuereinheit (20) dazu ausgebildet ist, den Empfang eines ersten und/oder zweiten Antwortimpulses zu überwachen.

9. Datenübertragungssystem nach einem der vorstehenden Ansprüche,
**dadurch gekennzeichnet, dass**
die erste Slaveeinrichtung (150) wenigstens einen mit der zweiten Auswerte- und Steuereinheit (160) verbundenen zweiten Eingang (183) aufweist, und/oder dass
die wenigstens eine weitere Slaveeinrichtung (150') wenigstens einen mit der dritten Auswerte- und Steuereinheit (160') verbundenen dritten Eingang (183') aufweist.

10. Datenübertragungssystem nach einem der vorstehenden Ansprüche,
**dadurch gekennzeichnet, dass**
in der Mastereinrichtung (20) die Anzahl der an die Stromschleife (140) angeschlossenen Slaveeinrichtungen (150, 150'), und/oder deren Gerätekennung, und/oder deren Adresse, und/oder deren Ort innerhalb des Datenübertragungssystems (10) gespeichert ist, dass in jeder Slaveeinrichtung (150, 150') die Adresse und/oder der Ort der Mastereinrichtung (20), die Anzahl der übrigen, an die Stromschleife (140) angeschlossenen Slaveeinrichtungen, und/oder deren Gerätekennung, und/oder deren Adresse, und/oder deren Ort innerhalb des Datenübertragungssystems (10) gespeichert sind, und dass
die erste Slaveeinrichtung (150) und die wenigstens eine weitere Slaveeinrichtung (150') jeweils dazu ausgebildet sind, Daten gezielt zu der Mastereinrichtung (20) und/oder zu wenigstens einer der anderen Slaveeinrichtungen zu übertragen, und dass die Mastereinrichtung (20) dazu ausgebildet ist, gezielt Daten zu der ersten Slaveeinrichtung (150) und/oder zu der wenigstens einen weiteren Slaveeinrichtung (150') zu übertragen.

11. Datenübertragungssystem nach einem der vorstehenden Ansprüche,
**dadurch gekennzeichnet, dass**
die Daten Steuerdaten, Prozessdaten, Parametrierungsdaten, Diagnosedaten und sicherheitsrelevante Daten enthalten können.

12. Datenübertragungssystem nach einem der vorstehenden Ansprüche,
**dadurch gekennzeichnet, dass**
die Mastereinrichtung (20) wenigstens eine weitere elektrische Energiequelle (101) enthält, die parallel zur ersten elektrischen Energiequelle (100) an die Stromschleife (140) angeschlossen ist, wobei die erste und die wenigstens eine weitere elektrische Energiequelle (100, 101) unabhängig voneinander von der ersten Auswerte- und Steuereinheit (60) ein- und ausschaltbar sind.

13. Datenübertragungssystem nach Anspruch 12
**dadurch gekennzeichnet, dass**
die erste und die wenigstens eine weitere elektrische Energiequelle (100, 101) jeweils als Stromquelle ausgebildet sind, die jeweils einen vorbestimmten konstanten Nennstrom liefern.

14. Mastereinrichtung (20),
welche zum Einsatz in einem Datenübertragungssystem (10) nach einem der Ansprüche 1 bis 13 ausgebildet ist, umfassend:
eine erste Auswerte- und Steuereinheit (60), die zum Erfassen eines externen Schaltzustands ausgebildet ist, welcher einen Ruhe- oder Arbeitszustand signalisiert,
eine erste an die Stromschleife (140) angeschlossenen, von der ersten Auswerte- und Steuereinheit (60) ein- und ausschaltbare elektrische Energiequelle (100), die dazu ausgebildet ist, bei einem von der ersten Auswerte- und Steuereinheit (60) erfassten Ruhezustand einen vorbestimmten konstanten Ruhestrom durch eine Stromschleife (140) zu treiben,
eine in die Stromschleife (140) schaltbare erste Strommodulationseinrichtung (110), welche dazu ausgebildet ist, den Ruhestrom in Abhängigkeit von einem Steuersignal, welches von der ersten Auswerte- und Steuereinheit (60) bereitgestellt wird, zu modulieren, um Daten über die Stromschleife (140) zu übertragen,
eine in die Stromschleife (140) schaltbare erste Strommesseinrichtung (120), welche mit der ersten Auswerte- und Steuereinheit (60) verbunden ist, wobei die erste Auswerte- und Steuereinheit (60) dazu ausgebildet ist, den von der ersten
Strommesseinrichtung (120) gemessenen Strom auszuwerten und in Abhängigkeit von dem Auswerteergebnis eine definierte Aktion auszuführen oder auszulösen, wobei
die Strommesseinrichtung (120) und die Strommodulationseinrichtung (110) in Reihe geschaltet sind.

15. Slaveeinrichtung (150, 150'),
welche zum Einsatz in einem Datenübertragungssystem (10) nach einem der Ansprüche 1 bis 13 ausgebildet ist, umfassend:
eine Auswerte- und Steuereinheit (160),
eine in die Stromschleife (140) schaltbare Strommodulationseinrichtung (200), welche dazu ausgebildet ist, den Ruhestrom in Abhängigkeit von einem Steuersignal, welches von der zweiten Auswerte- und Steuereinheit (160) bereitgestellt wird, zu modulieren, um Daten über die Stromschleife (140) zu übertragen, und
eine in die Stromschleife (140) schaltbare zweite Strommesseinrichtung (170), welche mit der zweiten Auswerte- und Steuereinheit (160) verbunden ist, wobei die zweite Auswerte- und Steuereinheit (160) dazu ausgebildet ist, den von der zweiten Strommesseinrichtung (170) gemessenen Strom auszuwerten und in Abhängigkeit von dem Auswerteergebnis eine definierte Aktion auszuführen oder auszulösen, wobei
die Strommesseinrichtung (170) und die Strommodulationseinrichtung (200) in Reihe geschaltet sind.

## Claims

1. A data transmission system (10) for current-modulated transfer of data between a master device (20) and at least one slave device (150, 150'), wherein the data transmission system (10) can be used in a safety-related automation system and has the following features:
- a current loop (140) that is only adapted for data transfer;
- a master device (20), comprising
a first evaluation and control unit (60) adapted to detect an external switching state which signals a quiescent state or working state;
a first electrical power source (100) which is connected to the current loop (140) and can be switched on and off by the first evaluation and control unit (60), which in the case of a quiescent state as detected by the first evaluation and control unit (60) drives a predefined constant bias-current through the current loop (140);
a first current modulating device (110) connected into the current loop (140) and adapted to modulate the bias-current in dependence of a control signal provided by the first evaluation and control unit (60), in order to transmit data via the current loop (140);
a first current measuring device (120) connected into the current loop (140) and connected to the first evaluation and control unit (60), wherein the first evaluation and control unit (60) is adapted to evaluate the current measured by the first current measuring device (120) and to execute or trigger a defined action depending on the evaluation result; wherein
the current measuring device (120) and the current modulating device (110) are connected in series;
- a first slave device (150), comprising
a second evaluation and control unit (160);
a second current modulating device (200) connected into the current loop (140) and adapted to modulate the bias current in dependence of a control signal provided by the second evaluation and control unit (160), in order to transmit data via the current loop (140); and
a second current measuring device (170) connected into the current loop (140) and connected to the second evaluation and control unit (160), wherein the second evaluation and control unit (160) is adapted to evaluate the current measured by the second current measuring device (170) and to execute or trigger a defined action depending on the evaluation result; wherein
the current measuring device (170) and the current modulating device (200) are connected in series.

2. The data transmission system according to claim 1,
**characterized by**
at least one further slave device (150'), comprising:
a third evaluation and control unit (160');
a third current modulating device (200') connected into the current loop (140) and adapted to modulate the bias current in dependence of a control signal provided by the third evaluation and control unit (160'), in order to transmit data; and
a third current measuring device (170') connected into the current loop (140) and connected to the third evaluation and control unit (160'), wherein the third evaluation and control unit (160') is adapted to evaluate the current measured by the third current measuring device (170') and to execute or trigger a defined action depending on the evaluation result; wherein
the current measuring device (170') and the current modulating device (200') are connected in series.

3. The data transmission system according to claim 1 or 2,
**characterized in that**
the first current modulating device (110) of the master device (20) has a first switching device (110) which is able to open and close the current loop (140) in response to a control signal of the evaluation and control unit (60) of the master device (20); and/or that the second current modulating device (190) of the first slave device (150) has a second switching device (200) which is able to open and close the current loop (140) in response to a control signal of the evaluation and control unit (160) of the first slave device (150); and/or that
the third current modulating device (200') of the second slave device (150') has a third switching device (200') which is able to open and close the current loop (140) in response to a control signal of the evaluation and control unit (160') of the second slave device (150').

4. The data transmission system according to any one of the preceding claims,
**characterized in that**
the first current measuring device (120), the second current measuring device (170) and the third current measuring device (170') each have a measuring resistor (121, 172, 172') and a differential amplifier (122, 171, 171') connected to the respective evaluation and control unit (60, 160, 160').

5. The data transmission system according to any one of the preceding claims,
**characterized in that**
the master device (20) has at least one first input (40) connected to the first evaluation and control unit (60), to which a fourth switching device (30) is connected, which supplies the external switching state.

6. The data transmission system according to any one of the preceding claims,
**characterized in that**
the master device (20) has at least one first output (70, 71) that can be controlled by the first evaluation and control unit (60); and/or that
the first slave device (150) has at least one second output (184, 185) that can be controlled by the second evaluation and control unit (160); and/or that the at least one further slave device (150') has at least one third output (184', 185') that can be controlled by the third evaluation and control unit (160').

7. The data transmission system according to claim 6,
**characterized in that**
the first evaluation and control unit (60) of the master device (20) is able to switch on and off the first electrical power source (100) and/or the first switching device such that a switch-off signal appears in the current loop (140); and/or that
the second evaluation and control unit (160) of the first slave device (150) is adapted to control the second switching device (200) such that a switch-off signal appears in the current loop (140); and/or that the third evaluation and control unit (160') of the at least one further slave device (150') is adapted to control the third switching device (200') such that a switch-off signal appears in the current loop (140); and that
each of the first and/or or second and/or third evaluation and control unit is adapted to switch off the respective output in response to a received switch-off signal.

8. The data transmission system according to any one of the preceding claims,
**characterized in that**
the first evaluation and control unit (60) of the master device (20) is able to switch on and off the first electrical power source (100) and/or the first switching device (110) such that at least one test pulse appears in the current loop (140); that
the second evaluation and control unit (160) of the first slave device (150) is adapted to be responsive to a received test pulse by controlling the second switching device (200) such that a first response pulse appears in the current loop (140), which is delayed by a first adjustable time relative to the test pulse; that the third evaluation and control unit (160') of the at least one further slave device (150') is adapted to be responsive to a received test pulse by controlling the third switching device (200') such that a second response pulse appears in the current loop (140), which is delayed by a second adjustable time relative to the test pulse; and that
the first evaluation and control unit (20) is adapted to monitor the reception of a first and/or second response pulse.

9. The data transmission system according to any one of the preceding claims,
**characterized in that**
the first slave device (150) has at least one second input (183) connected to the second evaluation and control unit (160); and/or that
the at least one further slave device (150') has at least one third input (183') connected to the third evaluation and control unit (160').

10. The data transmission system according to any one of the preceding claims,
**characterized in that**
the master device (20) stores the number of slave devices (150, 150') connected to the current loop (140) and/or the device identifier thereof, and/or the address thereof, and/or the location thereof within the data transmission system (10); that
each slave device (150, 150') stores the address and/or the location of the master device (20), the number of the rest of the slave devices connected to the current loop (140), and/or the device identifier thereof, and/or the address thereof, and/or the location thereof within the data transmission system (10); and that
the first slave device (150) and the at least one further slave device (150') are each adapted to selectively transmit data to the master device (20) and/or to at least one of the other slave devices; and that the master device (20) is adapted to selectively transmit data to the first slave device (150) and/or to the at least one further slave device (150').

11. The data transmission system according to any one of the preceding claims,
**characterized in that**
the data may include control data, process data, parameterization data, diagnostic data, and safety-relevant data.

12. The data transmission system according to any one of the preceding claims,
**characterized in that**
the master device (20) comprises at least one further electrical power source (101) that is connected to the current loop (140) in parallel to the first electrical power source (100), wherein the first and the at least one further electrical power source (100, 101) can be switched on and off independently from each other by the first evaluation and control unit (60).

13. The data transmission system according to claim 12,
**characterized in that**
the first and the at least one further electrical power source (100, 101) are each configured as a current source each supplying a predefined constant rated current.

14. A master device (20), adapted for use in a data transmission system (10) according to any one of claims 1 to 13, comprising:
a first evaluation and control unit (60) adapted to detect an external switching state which signals a quiescent or working state;
a first electrical power source (100) which is connected to the current loop (140) and can be switched on and off by the first evaluation and control unit (60), and which is adapted, in the case of a quiescent state as detected by the first evaluation and control unit (60), to drive a predefined constant bias-current through a current loop (140) ;
a first current modulating device (110) connectable into the current loop (140) and adapted to modulate the bias-current in dependence of a control signal provided by the first evaluation and control unit (60), in order to transmit data via the current loop (140);
a first current measuring device (120) connectable into the current loop (140) and connected to the first evaluation and control unit (60), wherein the first evaluation and control unit (60) is adapted to evaluate the current measured by the first current measuring device (120) and to execute or trigger a defined action depending on the evaluation result; wherein
the current measuring device (120) and the current modulating device (110) are connected in series.

15. A slave device (150, 150'), adapted for use in a data transmission system (10) according to any one of claims 1 to 13, comprising:
an evaluation and control unit (160);
a current modulating device (200) connectable into the current loop (140) and adapted to modulate the bias-current in dependence of a control signal provided by the second evaluation and control unit (160), in order to transmit data via the current loop (140); and
a second current measuring device (170) connectable into the current loop (140) and connected to the second evaluation and control unit (160), wherein the second evaluation and control unit (160) is adapted to evaluate the current measured by the second current measuring device (170) and to execute or trigger a defined action depending on the evaluation result; wherein
the current measuring device (170) and the current modulating device (200) are connected in series.

## Revendications

1. Système de transmission de données (10) pour une transmission à modulation de courant de données entre un dispositif maître (20) et au moins un dispositif esclave (150, 150'), où le système de transmission de données (10) peut être inséré dans une installation d'automatisation axée sur la sécurité et présente les caractéristiques suivantes :
- une boucle de courant (140) qui est conçue uniquement pour la transmission de données,
- un dispositif maître (20) avec
une première unité d'analyse et de commande (60) qui est conçue pour saisir un état de commutation extérieur, lequel signale un état de repos ou de fonctionnement,
une première source d'énergie (100) électrique raccordée à la boucle de courant (140), pouvant être allumée et éteinte par la première unité d'analyse et de commande (60), laquelle source d'énergie conduit un courant de repos constant prédéterminé à travers la boucle de courant (140) lorsqu'un état de repos a été saisi par la première unité d'analyse et de commande (60),
un premier dispositif de modulation de courant (110) monté dans la boucle de courant (140), lequel est conçu pour moduler le courant de repos en fonction d'un signal de commande qui est mis à disposition par la première unité d'analyse et de commande (60), afin de transmettre des données via la boucle de courant (140),
un premier dispositif de mesure de courant (120) monté dans la boucle de courant (140), lequel est raccordé à la première unité d'analyse et de commande (60), où la première unité d'analyse et de commande (60) est conçue pour analyser le courant mesuré par le premier dispositif de mesure de courant (120) et réaliser ou déclencher une action définie en fonction du résultat d'analyse, où
le dispositif de mesure de courant (120) et le dispositif de modulation de courant (110) sont montés en série,
- un premier dispositif esclave (150) contenant une deuxième unité d'analyse et de commande (160), un deuxième dispositif de modulation de courant (200) monté dans la boucle de courant (140), lequel est conçu pour moduler le courant de repos en fonction d'un signal de commande qui est mis à disposition par la deuxième unité d'analyse et de commande (160), afin de transmettre des données via la boucle de courant (140), et
un deuxième dispositif de mesure de courant (170) monté dans la boucle de courant (140), lequel est raccordé à la deuxième unité d'analyse et de commande (160), où la deuxième unité d'analyse et de commande (160) est conçue pour analyser le courant mesuré par le deuxième dispositif de mesure de courant (170) et réaliser ou déclencher une action définie en fonction du résultat d'analyse, où
le dispositif de mesure de courant (170) et le dispositif de modulation de courant (200) sont montés en série.

2. Système de transmission de données selon la revendication 1, **caractérisé par**
au moins un autre dispositif esclave (150') contenant :
une troisième unité d'analyse et de commande (160'), un troisième dispositif de modulation de courant (200') monté dans la boucle de courant (140), lequel est conçu pour moduler le courant de repos en fonction d'un signal de commande qui est mis à disposition par la troisième unité d'analyse et de commande (160'), afin de transmettre des données, et un troisième dispositif de mesure de courant (170') monté dans la boucle de courant (140), lequel est raccordé à la troisième unité d'analyse et de commande (160'), où la troisième unité d'analyse et de commande (160') est conçue pour analyser le courant mesuré au niveau du troisième dispositif de mesure de courant (170') et réaliser ou déclencher une action définie en fonction du résultat d'analyse, où
le dispositif de mesure de courant (170') et le dispositif de modulation de courant (200') sont montés en série,.

3. Système de transmission de données selon la revendication 1 ou 2, **caractérisé en ce que**
le premier dispositif de modulation de courant (110) du dispositif maître (20) présente un premier dispositif de commutation (110) qui, en réponse à un signal de commande de l'unité d'analyse et de commande (60) du dispositif maître (20), peut ouvrir et fermer la boucle de courant (140), et/ou **en ce que**
le deuxième dispositif de modulation de courant (190) du premier dispositif esclave (150) présente un deuxième dispositif de commutation (200) qui, en réponse à un signal de commande de l'unité d'analyse et de commande (160) du premier dispositif esclave (150), peut ouvrir et fermer la boucle de courant (140), et/ou **en ce que**
le troisième dispositif de modulation de courant (190') du deuxième dispositif esclave (150') présente un troisième dispositif de commutation (200') qui, en réponse à un signal de commande de l'unité d'analyse et de commande (160') du deuxième dispositif esclave (150'), peut ouvrir et fermer la boucle de courant (140).

4. Système de transmission de données selon l'une des revendications précédentes, **caractérisé en ce que**
le premier dispositif de mesure de courant (120), le deuxième dispositif de mesure de courant (170) et le troisième dispositif de mesure de courant (170') présentent respectivement une résistance de mesure (121, 172, 172') et un amplificateur différentiel (122, 171, 171') qui est raccordé à l'unité d'analyse et de commande (60, 160, 160') respective.

5. Système de transmission de données selon l'une des revendications précédentes, **caractérisé en ce que**
le dispositif maître (20) présente au moins une première entrée (40) raccordée à la première unité d'analyse et de commande (60), à laquelle entrée est raccordé un quatrième dispositif de commutation (30) qui fournit l'état de fonctionnement extérieur.

6. Système de transmission de données selon l'une des revendications précédentes, **caractérisé en ce que**
le dispositif maître (20) présente au moins une première sortie (70, 71) pouvant être commandée par la première unité d'analyse et de commande (60), et/ou **en ce que**
le premier dispositif esclave (150) présente au moins une deuxième sortie (184, 185) pouvant être commandée par la deuxième unité d'analyse et de commande (160), et/ou **en ce que**
l'au moins un autre dispositif esclave (150') présente au moins une troisième sortie (184', 185') pouvant être commandée par la troisième unité d'analyse et de commande (160) .

7. Système de transmission de données selon la revendication 6, **caractérisé en ce que**
la première unité d'analyse et de commande (60) du dispositif maître (20) peut allumer et éteindre la première source d'énergie (100) électrique et/ou le premier dispositif de commutation de telle sorte qu'un signal de désactivation apparaisse dans la boucle de courant (140), et/ou **en ce que**
la deuxième unité d'analyse et de commande (160) du premier dispositif esclave (150) est conçue pour commander le deuxième dispositif de commutation (200) de telle sorte qu'un signal de désactivation apparaisse dans la boucle de courant (140), et/ou **en ce que**
la troisième unité d'analyse et de commande (160') de l'au moins un autre dispositif esclave (150') est conçue pour commander le troisième dispositif de commutation (200') de telle sorte qu'un signal de désactivation apparaisse dans la boucle de courant (140), et **en ce que**
la première et/ou deuxième et/ou troisième unité d'analyse et de commande est respectivement conçue pour, en réponse à un signal de désactivation reçu, désactiver la sortie respective.

8. Système de transmission de données selon l'une des revendications précédentes, **caractérisé en ce que**
la première unité d'analyse et de commande (60) du dispositif maître (20) peut allumer et éteindre la première source d'énergie (100) électrique et/ou le premier dispositif de commutation (110) de telle sorte qu'au moins une impulsion de test apparaisse dans la boucle de courant (140), **en ce que**
la deuxième unité d'analyse et de commande (160) du premier dispositif esclave (150) est conçue pour, en réponse à une impulsion de test reçue, commander le deuxième dispositif de commutation (200) de telle sorte qu'apparaisse dans la boucle de courant (140) une première impulsion à réponse qui est retardée par rapport à l'impulsion de test d'un premier temps réglable, **en ce que**
la troisième unité d'analyse et de commande (160') de l'au moins un autre dispositif esclave (150') est conçue pour, en réponse à une impulsion de test reçue, commander le troisième dispositif de commutation (200') de telle sorte qu'apparaisse dans la boucle de courant (140) une seconde impulsion à réponse qui est retardée par rapport à l'impulsion de test d'un second temps réglable, et **en ce que**
la première unité d'analyse et de commande (20) est conçue pour surveiller la réception d'une première et/ou seconde impulsion à réponse.

9. Système de transmission de données selon l'une des revendications précédentes, **caractérisé en ce que**
le premier dispositif esclave (150) présente au moins une deuxième entrée (183) raccordée à la deuxième unité d'analyse et de commande (160), et/ou **en ce que**
l'au moins un autre dispositif esclave (150') présente au moins une troisième entrée (183') raccordée à la troisième unité d'analyse et de commande (160').

10. Système de transmission de données selon l'une des revendications précédentes, **caractérisé en ce que**
dans le dispositif maître (20) est stocké le nombre des dispositifs esclaves (150, 150') raccordés à la boucle de courant (140), et/ou leur code d'appareil, et/ou leur adresse, et/ou leur emplacement à l'intérieur du système de transmission de données (10), **en ce que**
dans chaque dispositif esclave (150, 150') sont stockés l'adresse et/ou l'emplacement du dispositif maître (20), le nombre des dispositifs esclaves raccordés à la boucle de courant (140) restants, et/ou leur code d'appareil, et/ou leur adresse, et/ou leur emplacement à l'intérieur du système de transmission de données (10), et **en ce que**
le premier dispositif esclave (150) et l'au moins un autre dispositif esclave (150') sont respectivement conçus pour transmettre de manière ciblée des données vers le dispositif maître (20) et/ou vers au moins l'un des autres dispositifs esclaves, et **en ce que**
le dispositif maître (20) est conçu pour transmettre de manière ciblée des données vers le premier dispositif esclave (150) et/ou vers l'au moins un autre dispositif esclave (150').

11. Système de transmission de données selon l'une des revendications précédentes, **caractérisé en ce que**
les données peuvent contenir des données de commande, des données de processus, des données de paramétrage, des données de diagnostic et des données pertinentes pour la sécurité.

12. Système de transmission de données selon l'une des revendications précédentes, **caractérisé en ce que**
le dispositif maître (20) contient au moins une autre source d'énergie (101) électrique qui est raccordée à la boucle de courant (140) en parallèle de la première source d'énergie (100) électrique, où la première et l'au moins une autre source d'énergie (100, 101) électrique peuvent être allumées et éteintes indépendamment l'une de l'autre par la première unité d'analyse et de commande (60).

13. Système de transmission de données selon la revendication 12, **caractérisé en ce que**
la première et l'au moins une autre source d'énergie (100, 101) sont respectivement conçues en tant que source de courant, qui fournissent respectivement un courant nominal constant prédéterminé.

14. Dispositif maître (20),
lequel est conçu pour une utilisation dans un système de transmission de données (10) selon l'une des revendications 1 à 13, comprenant :
une première unité d'analyse et de commande (60) qui est conçue pour saisir un état de commutation extérieur, lequel signale un état de repos ou de fonctionnement,
une première source d'énergie (100) électrique raccordée à la boucle de courant (140), pouvant être allumée et éteinte par la première unité d'analyse et de commande (60), laquelle source d'énergie est conçue pour conduire un courant de repos constant prédéterminé à travers une boucle de courant (140) lorsqu'un état de repos a été saisi par la première unité d'analyse et de commande (60),
un premier dispositif de modulation de courant (110) monté dans la boucle de courant (140), lequel est conçu pour moduler le courant de repos en fonction d'un signal de commande qui est mis à disposition par la première unité d'analyse et de commande (60), afin de transmettre des données via la boucle de courant (140),
un premier dispositif de mesure de courant (120) pouvant être monté dans la boucle de courant (140), lequel est raccordé à la première unité d'analyse et de commande (60), où la première unité d'analyse et de commande (60) est conçue pour analyser le courant mesuré par le premier dispositif de mesure de courant (120) et réaliser ou déclencher une action définie en fonction du résultat d'analyse, où
le dispositif de mesure de courant (120) et le dispositif de modulation de courant (110) sont montés en série.

15. Dispositif esclave (150, 150'),
lequel est conçu pour une utilisation dans un système de transmission de données (10) selon l'une des revendications 1 à 13, comprenant :
une unité d'analyse et de commande (160), un dispositif de modulation de courant (200) pouvant être monté dans la boucle de courant (140), lequel est conçu pour moduler le courant de repos en fonction d'un signal de commande qui est mis à disposition par la deuxième unité d'analyse et de commande (160), afin de transmettre des données via la boucle de courant (140), et
un deuxième dispositif de mesure de courant (170) pouvant être monté dans la boucle de courant (140), lequel est raccordé à la deuxième unité d'analyse et de commande (160), où la deuxième unité d'analyse et de commande (160) est conçue pour analyser le courant mesuré par le deuxième dispositif de mesure de courant (170) et réaliser ou déclencher une action définie en fonction du résultat d'analyse, où
le dispositif de mesure de courant (170) et le dispositif de modulation de courant (200) sont montés en série.
